# EUROPEAN PATENT SPECIFICATION

(11) **EP 2 930 896 B1**
(45) Date of publication and mention of the grant of the patent: **02.11.2016**
(21) Application number: 15159647.5
(22) Date of filing: 18.03.2015
(51) Int. Cl.: H04L 12/933

(54) **Ethernet network device and local ethernet network**
Ethernet-Netzwerksvorrichtung und lokales Ethernet-Netzwerk
Dispositif de réseau Ethernet et réseau local Ethernet

(30) Priority: 08.04.2014 IT MI20140643
(43) Date of publication of application: 14.10.2015
(73) Proprietor: DVE Progettazione Elettronica di Brugnoni Gabriele, 21020 Casciago (Varese) (IT)
(72) Inventor: Brugnoni, Gabriele, 21020 Casciago (Varese) (IT)
(74) Representative: Ponzellini, Gianmarco

(56) References cited:
- US-A1- 2004 100 954
- US-B1- 6 760 341

## Description

### FIELD OF THE INVENTION

The present invention refers to an Ethernet network and a local area Ethernet network device. For example, the Ethernet network device, object of the present invention, finds application in the electronics field for connecting a plurality of peripherals to a host (computer or microprocessor having an Ethernet communication port) by forming a Master-Slave type interface; the Ethernet network device finds an advantageous application in local area networks in which it is required a predefined synchronization degree of the peripherals commanded by the host. The network device, object of the present invention, can find an application in different types of local area networks for synchronizing several peripherals harnessing an Ethernet-type connection; by way of example, the network device can be used for defining local area networks inside industrial plants, in the robotics, in medical instruments, in CNC tool machines, in professional lighting systems, in the domotics and automotive fields.

### STATE OF THE ART

In the computer and telecommunications field, a local area network (LAN) or wide local area network (WLAN) represents a computer network connecting together one or more control units (for example personal computers) extendable to peripheral devices possibly shared among several units. To date, the local area networks are generally based on Ethernet technological standards (LANs whose connection is physically made by cables) and/or Wi-Fi (WLANs whose connection is made by a wireless interface). Such networks (LANs and/or WLANs) are largely used because they enable to define high performance connections in terms of data rate, do not require dedicated circuits on telephone leased lines, are cost-effective and have a simple implementation. A limit of the local area networks is represented by the reachable coverage (extension): the range inside which it is possible to define a connection between PCs and peripherals is limited, for example inside a house or an enterprise. In other words, the limit is defined by the maximum distance coverable by the transmitted data packets, for example between a computer and a peripheral. More specifically, with reference to Ethernet LANs (cabled connection), the restriction is defined by the maximum extension reachable by the cable: above a certain length, the signal attenuation is too high and there is a data loss. The standard for the Ethernet cables, generally used, is represented by the 100BASE-T type (twisted cables of copper for transmitting at 100 Mbps) whose length is limited to 100 meters. Instead, with reference to WLANs (wireless connection), the restriction is represented by the amplitude of the signal defined by a wireless repeater, usually adapted to cover a distance comprised between 30 and 100 meters, from the repeater. However, considering the countless advantages related to the use of Ethernet LANs, these latter are broadly used for connecting computers and peripherals located inside a certain distance. With reference to the present discussion are particularly interesting the LANs (physical connection by cables) used for connecting one or more computers (Masters) to a plurality of peripherals which must be controlled and synchronized with each other. To date, such connection is performed by hubs or switches.

A hub is a network device forwarding income data from anyone of its ports to all the other ports in a diffusive way (network node); for this reason, the hub is also called "multi-port repeater". More particularly, the hub is a physical device (level 1 device of the OSI/ISO model) retransmitting the electric signals received without analyzing and processing the passing data packet (the hub is not involved in the transmitted data). De facto, the hub represents a simple node enabling two devices to communicate as if the node (hub) were non-existent, besides a low additional delay in the transmission, in addition to the standard propagation delay. An important disadvantage related to the hub structure refers to the fact that the simple propagation of the electrical signal can cause collisions among the transmitted packets. Under the condition wherein two or more computers simultaneously transmit to several hub ports, there will be a collision among the receiving packets and the transmission of the same is obstructed (the transmission by the same devices must be repeated): the hub is not capable of distinguishing the segments of the LAN. It is useful to note that despite the hub enables a fast data transmission (circulation), such device is unsuitable to be used inside local area networks in which the transmission must be provided within a certain time and most of all in which the synchronization of the peripherals must be provided; the data collisions caused by the hub widely affect the reliability of the same and prevent the management/control of the transmission latency: the latency cannot be de facto predicted. The hub structure further prevents its use inside local area networks having a great number of nodes: a greater number of nodes would substantially increase the chance of collisions among the transmitted packets.

A switch is a network device or network inner node in charge of switching at datalink level (level 2 of the ISO/OSI model) that is it is in charge of routing, inside the local area networks, via MAC addresses: the switch provides to selectively forward the received data or frames towards a precise receiver thanks to a unique "port-address" correspondence. The switch differs from the hub because it provides the "routing" of the data packet: the data passing through the switch are processed and addressed to the destination device/devices reducing in this way the so-called collision domain present in the broadcast local area networks (networks managed by hubs). An advantage of the switch with respect to the hub is therefore related to the fact that the switch has the intelligence necessary to acknowledge the data packet, by storing and deciding on which port transferring it. While the switch reduces at the minimum the chance of data collisions (it does not completely avoid the collision problem) inside a network, the data packet processing step (acknowledgement and routing) requires a certain time and introduces a delay in the data transmission: the data transmission speed with reference to the hub is certainly reduced. It is useful to note that the data packet processing step, besides determining a slow-down of the data transmission, is a not-controllable and - determinable step which makes virtually impossible to estimate the latency times of processing the data packets to be transmitted. A further disadvantage with respect to the hub is represented by the certainly greater cost of the switch which impacts on the use of the same in electronic devices sensitive to the component cost.

Therefore, the Applicant has noted that, also the switch, as the hub, is inadequate to the local area network in which the data transmission must be provided within a certain time. De facto, also the switches have a certain "unpredictability" preventing a control on the synchronization of plural peripherals; for example two peripherals can simultaneously send a frame to the host which determines a contention. It is observed that the Ethernet LANs having the above described devices/connections (hubs and switches) structure, are de facto useless for specific applications wherein it is of the utmost importance to know/minimize the transmission data times for ensuring the synchronization of several peripherals. Such dedicated networks require a deterministic real-time protocol (typically used in the so-called "embedded" systems).

An example of application of networks to synchronized peripherals is represented by plants for controlling a plurality of electric motors managing the movement and effect of a floodlight, for example a stage floodlight; in this particular case, the control motors must be connected to each other by means of a dedicated local area network. To date, only one extensive network dedicated to the specific application is capable of enabling to control the motors and therefore efficiently manage each floodlight.

The patent application US2004/0100954 discloses an Ethernet switching fabric comprising switching units coupled together by a data ring.

### OBJECT OF THE INVENTION

Therefore, it is an object of the present invention to substantially solve at least one of the disadvantages and/or restrictions of the preceding solutions.

A first object of the invention consists of providing an Ethernet network device enabling to fast transmitting data packets by preventing the collision thereof. A further main object of the invention consists of providing an Ethernet network device enabling to determine/minimize the data and latency transmission times of all of the elements forming such device. Particularly, it is the object of the Ethernet network device to form a local area Ethernet network which makes possible to easily monitor and control the data packets transmission times and holding them substantially constant over time. It is a further object of the invention to provide an Ethernet network device of simple and economical implementation. It is a further main object of the present invention to provide a local area Ethernet network enabling a fast data packets transmission and at the same time ensure an efficient control on all the network peripherals, for example ensure a correct and accurate synchronization of these latter. One or more of the above discussed objects which will better emerge over the following descriptions are substantially met by an Ethernet network device and a local area Ethernet network according to one or more of the attached claims.

### SUMMARY

Aspects of the invention will be described in the following.

In a 1st aspect it is provided an Ethernet network device (1) comprising:
- at least one host (2) having at least one transmission port (TX) and at least one reception port (RX),
- a plurality of slave devices (3) comprising at least one first and one last slave devices (3a, 3b), each slave device (3) having:
   - a physical device or PHY-chip (4), particularly only one physical device or PHY-chip (4), having at least one respective reception port (RX) and at least one respective transmission port (TX);
   - at least one integrated device (5), particularly of a programmable type, connected to the physical device (4), optionally by a MII or a RMII interface;
- at least one circuit (6) on which the host (2) and slave devices (3) are active, said circuit (6) having at least one main data sending line (7) directly connected, on one side, to the host (2) transmission port (TX) and, on the other side, directly connected to the first slave device (3a) reception port (RX), said circuit (6) further having a main data reception line (8) directly connected, on one side, to the host (2) reception port (RX) and, on the other side, connected to the last slave device (3b) transmission port (TX), said circuit (6) further having at least one interconnection line (9) connected, on one side, to the transmission port (TX) of one slave device (3), and on the other side, directly connected to the reception port (RX) of a slave device (3) consecutive according to a data transmission direction to define a series connection between the slave devices (3),
   the slave devices (3) having a same MAC address which is set in each integrated device (5), so that the integrated device (5) of each of said slave devices (3) is configured for receiving a data packet (D) having said MAC address, each integrated device (5) being configured for:
- receiving at least one data packet (D) according to an Ethernet protocol, said data packet (D) being of the type comprising at least one preamble (P), at least one receiver MAC address (MD), at least one source MAC address (MS), a field identifying the used protocol type (FT), at least one payload field (DIF), a cyclical redundancy control field (FCS),
- reading at least part of the contents of the payload (DIF),
- withdrawing at least a part of the data of the payload (DIF) containing the information destined to the slave device (3) itself,
- modifying at least part of the data contained in the payload (DIF) and/or data from the cyclical redundancy control field (FCS),
- simultaneously with the withdrawal of at least a part of the data of the payload (DIF), modifying at least a part of data inside the same payload (DIF) of the same data packet (D).

In a 2nd aspect according to the aspect 1st, each integrated device (5) is configured for withdrawing at least a part of data of the payload (DIF) and simultaneously modifying, particularly writing and/or substituting, data inside the same data packet (D) according to the data direction transmission without processing the read and/or withdrawn data.

In a 3rd aspect according to anyone of the preceding aspects, the physical device (4) of each of said slave devices (3) is configured for receiving at the inlet the data packet (D) from the preamble (P) and activating the transmission via the reception port (RX) only after the passage of a predetermined number of bytes of the data packet (D), and therefore after a prefixed activation time (TO), said physical device (4) is configured for activating the transmission port (TX) simultaneously with or immediately after the activation of the reception port (RX) of the same physical device (4).

In a 4th aspect according to the preceding aspect, the integrated device (5) is configured for:
- receiving at the inlet, via the reception port (RX) of the physical device (4), the data packet (D),
- transmitting at the output, via the transmission port (TX), of the same physical device (4) the same data packet (D), particularly the data packet entering from the reception port (RX), substantially with a transmission delay equal to the activation time (TO).

In a 5th aspect according to anyone of the preceding aspects, the integrated device (5) is configured for reading and/or withdrawing at least part of the data contained in the data packet (D), during the step of receiving the same, the integrated device (5) is configured for modifying, particularly writing and/or substituting, at least part of data contained in the data packet (D) itself during the step of transmitting the same.

In a 6th aspect according to anyone of the preceding aspects, the physical device (4) of each of said slave devices (3) is configured for receiving at the inlet the data packet (D) from the preamble (P) and activating the transmission, via the reception port (RX), only after the passage of a predetermined number of bytes of the preamble (P).

In a 7th aspect according to the preceding aspect, the physical device (4) of each of said slave devices (3) is configured for receiving at the inlet the data packet (D) from the preamble (P) and activating the transmission, via the reception port (RX), only after the passage of a predetermined number of bytes comprised between 1 and 8.

In an 8th aspect according to anyone of the aspects from 3rd to 7th, the physical device (4) is configured for determining a delay between the reception of the data packet (D), via the reception port (RX), and the transmission of the same, via the transmission port (TX), substantially equal to the predetermined activation time (TO).

In a 9th aspect according to anyone of aspects from 3rd to 8th, the activation time (TO) is less than 1 µs, particularly is comprised between 100 and 960 ns.

In a 10th aspect according to anyone of the preceding aspects, at least one of the slave devices (3) is configured for exchanging the receiver MAC address field (MD) with the source MAC address field (MS) of the data packet (D) transmitted from the host (2) for setting this latter as a receiver, enabling the host (2) to receive the data packet (D) modified by the slave devices (3).

In an 11th aspect according to anyone of the preceding aspects, only one slave device (3) is configured for modifying the receiver MAC address field (MD) for inserting the host (2) MAC address.

In a 12th aspect according to anyone of the preceding aspects, the integrated device (5) of each slave device (3) is configured for:
- reading the receiver MAC address (MD),
- reading the source MAC address (MS),
- analyzing at least one of said MAC address fields for determining if these latter have been exchanged with respect to the host (2) sending condition,
- in case wherein the fields have been already exchanged by a preceding slave device (3), not proceeding with a further exchange of the MAC address fields,
- in case wherein the fields have not been already exchanged by a preceding slave device (3), possibly proceeding with exchanging the MAC address fields.

In a 13th aspect according to the preceding aspect, the step of analyzing at least one of the MAC address fields for determining if these latter have been exchanged with respect to the host (2) sending condition, comprises at least the following sub-steps:
- analyzing the source MAC address field (MS) for determining if coincides with the host (2) MAC address or the slave devices (3) MAC address,
- analyzing the receiver MAC address field (MD) for determining if coincides with the host (2) MAC address or the slave devices (3) MAC address.

In a 14th aspect according to anyone of the preceding aspects, the integrated device (5) of each slave device (3) is configured for:
- reading both the receiver MAD address field (MD) and source MAC address field (MS),
- checking that at least in one of the receiver and source MAC address fields there is the MAC address of the slave device (3) itself,
under the condition wherein the MAC address is present in at least one of said MAC address fields (MD, MS), the integrated device (5) of the slave device (3) is configured for withdrawing and/or modifying at least the data packet (D) payload (DIF), particularly withdrawing and/or modifying the payload (DIF) and modifying the control field (FCS); or
under the condition wherein the MAC address is absent in both the MAC address fields (MD, MS), the integrated device (5) of the slave device (3) is configured for sending the data packet (D) to the host and/or the slave device (3) consecutive along the data transmission direction, without reading and/or withdrawing and/or modifying the payload (DIF) data.

In a 15th aspect according to anyone of the preceding aspects, the integrated device (5) of each slave device (3) is configured for:
- reading the field identifying the used protocol type (FT),
- verifying that the field identifying the protocol type (FT) is the correct one and is effectively used,
under the condition wherein the field identifying the used protocol type (FT) is correct, the integrated device (5) of the slave device (3) is configured for withdrawing and/or modifying at least the data packet (D) payload (DIF), particularly withdrawing and/or modifying the payload (DIF) and modifying the protocol field (FCS); or
under the condition wherein the field identifying the used protocol type (FT) is unknown, the integrated device (5) of the slave device (3) is configured for sending the data packet (D) to the host and/or the slave device (3) consecutive along the data transmission direction, without reading and/or withdrawing and/or modifying the payload (DIF) data.

In a 16th aspect according to anyone of the preceding aspects, at least the main transmission and reception lines (7, 8) of the circuit (6) comprise Ethernet network cables, particularly the main transmission and reception lines (7, 8) comprise at least one selected in the group among the following cables: UTP, FTP, STP, S/STP.

In a 17th aspect according to anyone of the preceding aspects, the interconnection lines (9) of the slave device (3) comprise Ethernet network cables, particularly the interconnection lines (9) comprise at least one selected in the group among the following cables: UTP, FTP, STP, S/STP.

In an 18th aspect according to anyone of the preceding aspects, the host (2) reception port (RX) is directly connected to only one transmission port (TX) of an unique slave device (3).

In a 19th aspect according to anyone of the preceding aspects, the host (2) reception port (RX) is directly connected to the transmission port (TX) of a slave device (3) different from the first slave device (3a), optionally is directly connected to the transmission port (TX) of the last slave device (3b).

In a 20th aspect according to anyone of the preceding aspects, the host (2) transmission port (TX) is directly connected to only one reception port (RX) of an unique slave device (3).

In a 21st aspect according to anyone of the preceding aspects, the host (2) transmission port (TX) is directly connected to the first slave (3a) reception port (RX).

In a 22nd aspect according to anyone of the preceding aspects, each slave device (3) comprises only one physical device (4).

In a 23rd aspect according to anyone of the preceding aspects, each physical device (4) of each slave device (3) comprises only one transmission port (TX) and only one reception port (RX).

In a 24th aspect according to anyone of the preceding aspects, the reception port (RX) of a slave device (3) is directly connected to only one transmission port (TX) of the host (2) or of a preceding unique slave device (3) along the data packet (D) transmission direction.

In a 25th aspect according to anyone of the preceding aspects, the transmission port (TX) of a slave device (3) is directly connected to only one reception port (RX) of the host (2) or of a unique slave device (3) consecutive along the data packet (D) transmission direction.

In a 26th aspect according to anyone of the preceding aspects, the connection between the transmission port (TX) of a slave device (3) and the reception port (RX) of a slave device (3) consecutive along the data packet (D) transmission direction, is defined by a unique connection cable, particularly by a unique Ethernet-type cable.

In a 27th aspect according to anyone of the preceding aspects, the reception (RX) and transmission ports (TX) of the host (2) and slave devices (3) are not switchable.

In a 28th aspect according to anyone of the preceding aspects wherein, during the transmission, particularly during the circulation of a data packet in the circuit (6), each reception port (RX) is uniquely destined to receive a data packet (D) while each transmission port (TX) is uniquely destined to send a data packet (D).

In a 29th aspect according to anyone of the preceding aspects, the reception (RX) and transmission ports (TX) of the data packet (D) are configured for enabling only one transmission direction.

In a 30th aspect according to anyone of the preceding aspects, the network device (1) comprises a predetermined number of additional slave devices having a MAC address different from the MAC address of the slave devices (3) and a MAC address different from the host (2) MAC address.

In a 31st aspect according to anyone of the preceding aspects, each integrated circuit (5) of slave devices (3) is configured at least for:
- reading at least the receiver MAC address (MD) of the data packet (D),
- reading at least the source MAC address (MS) of the data packet (D),
- reading at least the payload field (DIF) of the data packet,
- reading at least the cyclical redundancy control field (FCS),
- withdrawing at least a part of data of the payload (DIF) containing the information destined to the slave device (3) itself,
- modifying at least part of data contained in the payload (DIF),
- recalculating, following a modification of the payload (DIF) data, the cyclical redundancy control field (FCS),
- forwarding the same data packet (D) or a modified data packet (D) to a consecutive slave device (3) before processing the read and withdrawn data.

In a 32nd aspect according to anyone of the preceding aspects, the host (2) is configured for defining, inside the data packet (D) payload (DIF), a plurality of identifying fields (10) each of them is destined to only one specific slave device (3), the host (2) is configured for communicating with each of the slave devices (3) by inserting in the respective identifying field (10) data identifying the specific slave device (3) and real data of information and/or commands for the specific slave device (3).

In a 33rd aspect according to the preceding aspect, the integrated device (5) of each slave device (3) is configured for:
- reading at least the identifying field (10) dedicated to it,
- withdrawing, from said identifying field (10), at least part of the data,
- modifying, particularly writing and/or modifying, inside said identifying field (10), at least a further part of data destined to the host (2), and/or to a further slave device (3),
- recalculating, after the modification of the identifying field (10), the control field (FCS).

In a 34th aspect according to the aspect 32nd or 33rd, the integrated device (5) of each slave device (3), under a condition in which the identifying field (10) destined to the slave device (3) itself is absent, is configured for:
- inserting in the data packet (D) payload (DIF) a field (10) identifying the slave device (3) itself,
- immediately after the insertion of the new indentifying field (10), recalculating the data packet (D) control field (FCS).

In a 35th aspect according to anyone of the preceding aspects, the physical device or PHY-chip (4) is configured for defining a full-duplex transmission mode with the reception and transmission ports (RX, TX) of the slave device itself.

In a 36th aspect according to anyone of the preceding aspects, the physical device or PHY-chip (4) is configured for transmitting data at a speed greater than 10 Mbps, particularly comprised between 100 and 1m000 Mbps.

In a 37th aspect according to anyone of the preceding aspects, the integrated device (5) comprises at least one selected in the group of the following elements: FPGA, CPLD.

In a 38th aspect according to anyone of the preceding aspects, the integrated device (5) of each slave device (3) is connected to one or more users (11), the integrated device (5), immediately after having withdrawn at least part of the data from the data packet (D), is configured for forwarding the data packet (D) itself to a consecutive slave device (3) and/or to the host (2) without executing the processing of the read and/or withdrawn data.

In a 39th aspect according to the preceding aspect, each integrated device (5) of each slave device (3) is configured for sending to the user (11) data withdrawn in an unprocessed form, or is configured for processing the withdrawn data and sending to the user (11) one or more command signals.

In a 40th aspect according to the preceding aspects, each user (11) is configured for:
- executing the commands specified by the host (2) and/or storing the information sent by this latter,
- optionally, providing to the integrated device (5), information to be transmitted to the host (2).

In a 41st aspect according to anyone of the aspects from 38th to 40th, the user (11) comprises:
- at least a control unit (12), connected to at least one integrated device (5), and connected to one or more actuators (13), or
- one or more actuators (13) directly connected to an integrated device (5).

In a 42nd aspect according to anyone of the preceding aspects, the slave devices (3) are configured for enabling to transmit the data packet (D) to all the slave devices (3) consecutive along the transmission direction within a time less than 60 µs, particularly within a time comprised between 10 and 50 µs.

In a 43rd aspect, it is provided a local network (10) comprising:
- at least one network device (1) according to anyone of the preceding aspects,
- at least one user (11) connected to the network device (1),
   the integrated device (5) of each slave device (3) is configured for:
- withdrawing the data dedicated to it and sending them to the host (2) by the data packet (D) payload (DIF),
- sending the data packet (D) to one consecutive slave device (3) and/or to the host (2) without executing the processing of the read and withdrawn data.

In a 44th aspect according to the preceding aspect, the integrated device of each slave device (3) is configured for:
- sending to the respective user (11) the data withdrawn by the data packet (D) without executing the processing of the same,
- particularly, modifying the data sent to the user (11) with the information received by this latter and directed to the host (2), optionally said data are substituted.

In a 45 aspect according to the aspect 43rd, the integrated device (5) of each slave device (3) is configured for:
- processing the data read and withdrawn after having forwarded the data packet (D) to one consecutive slave device (3) and/or host,
- sending, to one or more users, command signals regarding the processed data,
- optionally, receiving control signals from the users (11) and substituting, inside the circulating data packet (D), at least a part of the data of the payload with information present in the control signal and directed to the host (2) and/or further slave devices (3).

In a 46th aspect according to anyone of the aspects from 43rd to 45th, the user (11) comprises:
- a control unit (12) directly connected to the respective integrated device (5), and one or more actuators (13) directly connected to the control unit (12), said control unit (12) being interposed between the integrated device (5) and actuators (13), the control unit (12) being configured for processing the data sent to the host (2), passing from the integrated device (5), and sending a respective command signal to respective actuators (13), and/or
- one or more actuators (13) directly connected to a network device (1).

In a 47th aspect according to the preceding aspect, each actuator (13) comprises at least one stage floodlight, each stage floodlight comprising:
- a plurality of electric motors;
- a plurality of LEDs;
- one or more sensors;
- optionally one or more control units electrically connected to the motors, LEDs and sensors.

In a 48th aspect according to the preceding aspect, the integrated device (5) of each slave device (3) is connected at least to a plurality of electric motors, particularly comprised between 2 and 50, particularly between 5 and 40.

In a 49th aspect according to anyone of the aspects from 43rd to 48th, the slave devices (3) are configured for transmitting, during a single transmission cycle, the data of the data packet (D) to the respective user (11) within a time less than 60 µs, particularly within a time comprised between 10 and 50 µsec.

In a 50th aspect according to anyone of the aspects from 47th to 49th, each electric motor is controllable by a pulse-width modulation (PWM), particularly at a frequency of about 20 KHz, and wherein each integrated device (5) is configured for sending to the electric motor at least one command signal for each PWM cycle of the actuator (13).

In a 51st aspect, it is provided a plant (100) for controlling stage floodlights comprising:
- at least one stage floodlight,
- at least a network device (1) according to anyone of the aspects from 1st to 42th, engaged with at least one floodlight, particularly placed inside a floodlight, and configured for managing the operation and movements of this latter,
   the floodlight comprising at least the following components:
- a plurality of LEDs,
- a plurality of electric motors, particularly stepper or brushless motors,
- a plurality of cooling devices, particularly fans,
- a plurality of sensors, particularly temperature sensors,
- one or more control units or pilot circuits connected to the LEDs, motors and sensors,
the integrated device (5) of each slave device (3) is connected to a plurality of said components, each integrated device (5) is configured for sending data, from the data packet (D) generatable by the host (2), to said components for enabling the host (2) to control and manage said devices.

In a 52nd aspect according to the preceding aspect, the slave devices (3) are configured for reading and possibly withdrawing data contained in the data packet (D) payload (DIF) and circulating said packet in the circuit (6) without processing the withdrawn data.

In a 53rd aspect according to the aspect 51st or 52nd, each integrated device (5) is configured for:
- processing the withdrawn data, after having sent the data packet (D) to a consecutive slave device (3) or to the host (2), in order to generate a command signal to be send to one or more of said components, or
- forwarding the data withdrawn by the packet (D), without executing the processing, to the control unit which is configured for processing the data and defining command signals for one or more of said components.

In a 54th aspect according to the preceding aspect, the command signal sent from the integrated device (5) and/or from the control unit of the floodlight comprises at least one selected in the group of the following commands:
- the position of the electric motor and consequently of the floodlight,
- the activation or deactivation of the LEDs,
- the control request to be executed by one or more sensors,
- the activation or deactivation of one or more cooling devices.

In a 55th aspect according to anyone of the aspects from 51st to 54th, the integrated device (5) of each slave device (3) is connected to a number of electric motors comprised between 2 and 50, particularly between 5 and 40.

In a 56th aspect according to anyone of the aspects from 51st to 55th, each electric motor is controllable by a pulse-width modulation (PWM), particularly at the frequency of about 20 KHz,
and wherein each integrated device (5) is configured for sending to each electric motor at least a command signal for each PWM cycle.

In a 57th aspect according to anyone of the aspects from 51st to 56th, the integrated devices (5) are configured for enabling to send a data packet (D) in a time comprised between 20 and 50 µs, particularly between 30 and 45 µsec.

In a 58th aspect it is provided an Ethernet data packet (D) comprising:
- at least one preamble (P),
- at least one receiver MAC address (MD),
- at least one source MAC address (MS),
- a field identifying the used protocol type (FT),
- at least one payload field (DIF),
- at least one cyclical redundancy control field (FCS),
   the payload field (DIF) comprising a plurality of identifying fields (10), each of them comprises at least one data identifying, for example, a specific Master and/or slave device, and a real data field comprising information and/or commands for a specific Master and/or slave device.

In a 59th aspect according to the preceding aspect, the payload field (DIF) is placed inside the data packet (D), upon the following fields: preamble (P), source MAC address field (MS), receiver MAC address field (MD), a field identifying the used protocol type.

### BRIEF DESCRIPTION OF THE DRAWINGS

Some embodiments and some aspects of the invention will be described in the following with reference to the attached drawings given in an indicative and therefore non limiting way, wherein:
- Figure 1 is an outline of an Ethernet network device according to the present invention;
- Figure 2 is an outline of a local area Ethernet network according to the present invention;
- Figure 3 is an outline of a further local area Ethernet network according to the present invention;
- Figure 4 is an outline of an Ethernet data packet usable by the Ethernet network device according to the present invention;
- Figure 5 schematically represents some processing steps of a data packet by the network device according to the present invention;
- Figure 6 is a further outline of the Ethernet network device according to the present invention;
- Figure 7 illustrates in a schematic and non limiting way a step of receiving and transmitting the same data packet via an unique physical device of the network device object of the present invention;
- Figure 8 is a detail of the network device object of the present invention;

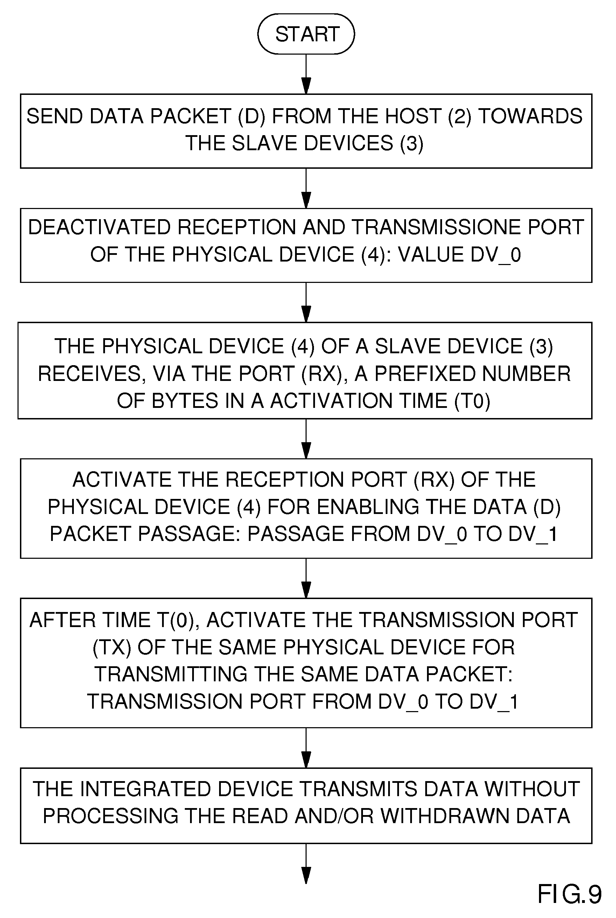

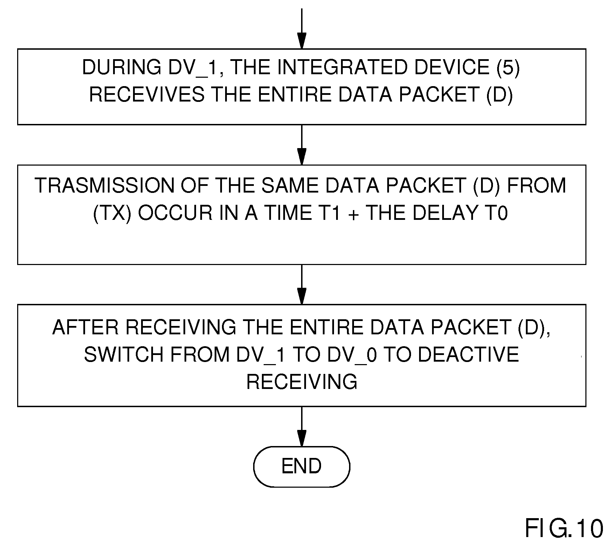

- Figures 9 and 10 are flowcharts regarding the reception and transmission of the same data packet through an unique physical device.

### DETAILED DESCRIPTION

### Ethernet network device

With 1 is generally indicated an Ethernet network device according to the present invention. The network device 1 can be advantageously used for defining computer Ethernet LANs for connecting one host 2 to a plurality of peripherals. The network device, object of the present invention, is configured for defining an extremely fast tool for transmitting (recirculating) data packets, suitable for enabling a fast command and effective monitoring of a high number of peripherals. De facto, the network device 1 can find an application in several types of local area networks, for example for synchronizing several peripherals; by way of example, the network device can be used for defining local area networks inside industrial plants, in the robotics field, in medical instruments, in CNC tool machines, in professional lighting systems, in the domotics and automotive fields.

The network device 1 which the present invention refers to, is based on the technological Ethernet standard; such standard defines the technical specifications at a physical level (for example connectors, cables, type of transmission) and at a MAC level or, more generally, at datalink level (level 2 of the ISO-OSI standard). There are different Ethernet technologies used for describing the local area networks (LAN); particularly, the standards which the present invention refers to are, for example: IEE 802.1, IEE 802.11, IEE 802.2, IEE 802.3, IEE 802.3ba.

The common element of the Ethernet technology is the structure or protocol of the data packet, called also frame; in the present description, it will be made reference to the frame by using also the term "data packet" (D). The frame received by the datalink layer has at least the following structure:
- the preamble (P). The preamble contains the first bytes of the data packet D adapted to "wake up" the adaptors of the receiver and to synchronize the oscillators with one of the senders.
- Receiver MAC address (MD). This field contains the receiver LAN address.
- Source MAC address (MS). This field contains the LAN address of the source sending the data packet.
- Ethernet type (FT). This field indicates the protocol type of the used network level during the transmission, or - in case of the frame IEEE 802.3 - the data field length.
- The payload (DIF). This field contains real data, which can have a length variable based on the transmission maximum unit of the Ethernet network; if the data overflow the maximum capacity, the data are distributed in plural packets, while if the data do not reach the minimum length, it is added a padding having a suitable length.
- The cyclical redundancy control field (FCS or CRC). This field is adapted to contain a reference enabling to detect if there are transmission errors; practically, the receiver calculates the CRC by an algorithm and compares it with the one received in this field.

More specifically, the network device 1, object of the present invention, finds an advantageous application for connecting a plurality of peripherals to one host 2 (for example a control unit or more simply a microprocessor having an Ethernet communication port) by forming a Master-Slave type interface: in this connection type, a Master device (in the present discussion it will be defined, in a non limiting way, only one host 2) has a one-way control on plural slave devices 3.

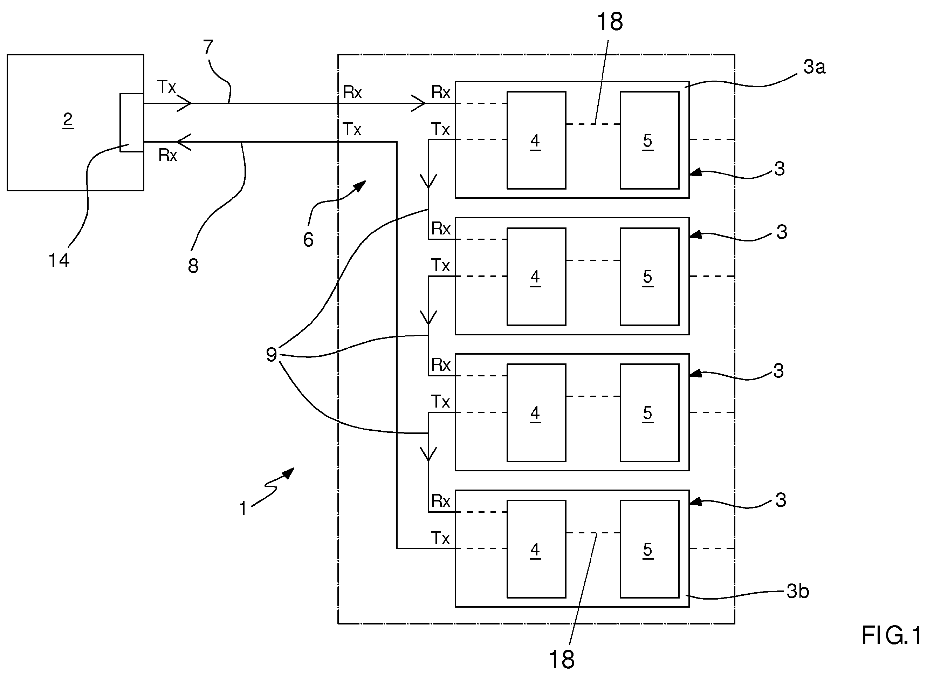

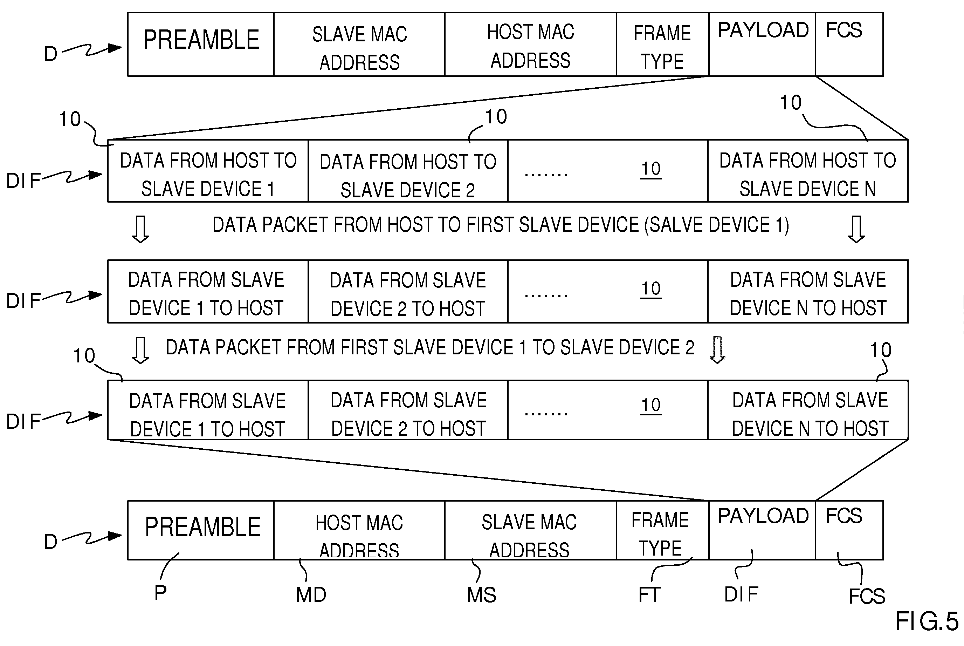

De facto, as it is visible for example in Figures 1-3, the network device 1 comprises a host 2 substantially consisting in a control unit or also in a personal computer. The host 2 is configured for generating a series of data packets D containing a series of commands and/or information destined to the slave devices 3; particularly, the host 2 is configured for generating a data packet D wherein the payload field DIF contains information and/or commands for the slave devices 3 (as previously said the real data field). More particularly, the host 2 is configured for defining, inside the data packet D payload DIF, a plurality of identifying fields 10 (see Figure 5), each of them is destined to at least one slave device 3, particularly to only one slave device 3: inside each identifying field 10 there are information and/or command signals dedicated to the slave device 3. De facto, each identifying field 10 has substantially a first acknowledgement field containing data identifying a particular slave device 3 and a real data field containing information and commands for the specific slave device 3. In this way the host 2 can generate, inside a single payload, as many communication identifying fields 10 as the slave devices 3. Further, in case the payload space is limited and therefore not sufficient for containing information for all the slave device 3, the host 2 can be further configured for sending plural frames for alternating the delivery to groups of slave devices. Further, the host 2 is configured for generating at least one Ethernet data packet D wherein, inside the receiver and source address fields (respectively the fields MD and MS), a MAC address of one or more slave devices 3 and the MAC address of the host 2 itself are specified: in this way, the host 2 is capable of addressing the data packet D towards one or more slave devices 3.

As it is visible in Figure 1-3, the host 2 comprises at least one Ethernet port 14 configured for defining the physical level connection of the host 2 to the LAN. More specifically, the port 14 comprises at least one transmission port TX and at least one reception port RX which are connected to a data transmission circuit 6. As it will be better described in the following, the network device 1 comprises a plurality of slave devices 3 comprising at least one first and one last slave devices 3a, 3b (Figure 1); the circuit 6 substantially represents the transmission/circulation path of the data packet D on which the slave devices 3 and host 2 are active. To better understand the type of connection defined between the host 2 and several slave devices 3, it is useful to disclose that each slave device 3 has a physical device or PHY-chip 4 having also a reception port RX and a transmission port TX: the type of port present on each slave device 3 is an Ethernet port substantially identical to the Ethernet port 14 of the host 2. As it is visible for example in Figure 1, the circuit 6 has at least one data sending main line 7 directly connected, on one side, to the transmission port TX of the host 2 and, on the other side, directly connected to the reception port RX of a slave device 3, particularly the first slave device 3a. Further, the circuit 6 has a data reception main line 8 directly connected, on one side, to the reception port RX of the host 2 and, on the other side, directly connected to a transmission port TX of a slave device 3, particularly the last slave device 3b. The main lines 7 and 8 of the circuit 6, connected to the host 2, substantially represent data transmission and reception channels from which there is the passage of information/commands between the host and slave devices 3.

As hereinbefore specified all the slave devices 3 are active on the circuit 6 and connected to this latter by an Ethernet port connection TX-RX. More specifically, all the slave devices 3 are serially connected in the circuit; particularly, the circuit 6 has at least one interconnection line 9 directly connected, on one side, to the transmission port TX of a slave device 3, on the other side, directly connected to the reception port RX of a slave device 3 immediately consecutive according to a data transmission direction for defining a series type connection between the slave devices 3 (Figures 1-3).

In a first solution outlined for example in Figure 1, the network device 1 provides a number of slave devices 3 greater than two (in a non limiting way, it is illustrated a four slave devices 3 configuration). In such condition, there are a first and last slave devices 3a, 3b: interposed between these slave devices 3 there is a predetermined number of slave devices 3 (intermediate devices) which are serially connected to the first and last slave devices 3a, 3b. In the configuration illustrated in Figure 1, there are, in a non limiting way, two intermediate slave devices 3. As hereinbefore described, the data sending main line 7 is directly connected, on one side, to the transmission port TX of the host 2 and, on the other side, to the reception port RX of the first slave device 3a. An interconnection line 9 is directly connected, on one side, to the transmission port TX of the first slave device 3a, on the other side, is directly connected to the reception port RX of a slave device 3 immediately consecutive according to the data transmission direction. The connection of an intermediate slave device 3 to a slave device 3, respectively immediately preceding and following, is implemented in the following way. A first interconnection line 9 is directly connected, on one side, to the reception port RX of an intermediate slave device 3, on the other side, is directly connected to the transmission port TX of a slave device 3 immediately preceding according to the data transmission line. A second interconnection line 9 is directly connected, on one side, to the transmission port TX of the intermediate slave device 3, on the other side, is directly connected to the reception port RX of a slave device 3 immediately consecutive along the data transmission direction.

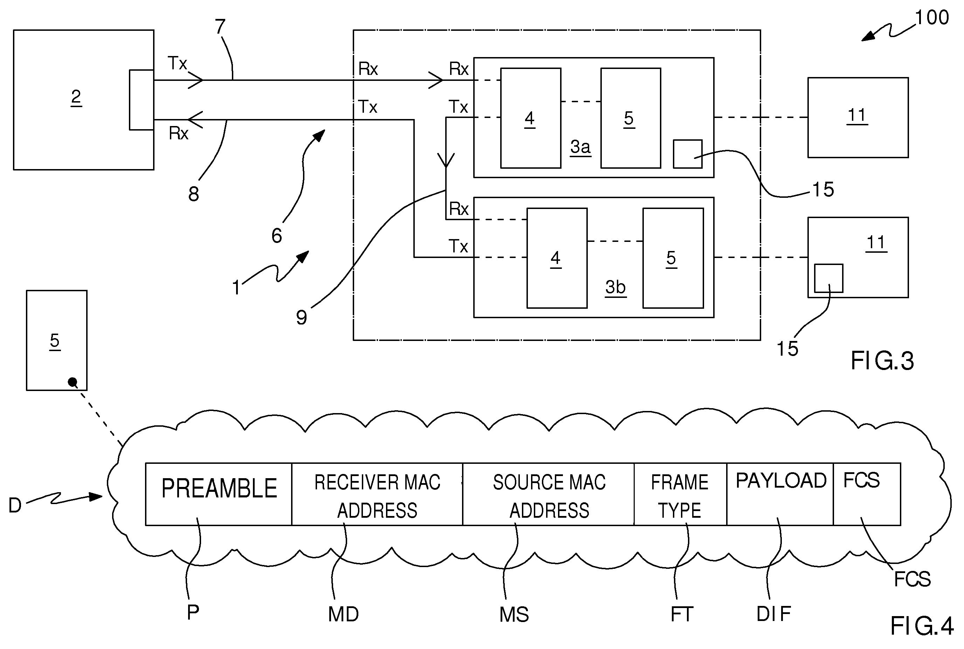

In a two-slave devices 3 configuration, as illustrated for example in Figure 3, there are only the first and last slave devices 3a, 3b which are directly connected to the host 2 and are connected to each other by an interconnection line 9: such line 9 connects the transmission port TX of the first slave device 3a to the reception port RX of the last slave device 3b. The circuit 6 substantially defines a kind of closed path wherein all the slave devices 3 are serially connected to each other and along which the data packets D can circulate according to only one transmission direction. In a non limiting configuration of the network device 1, this latter is configured for holding unchanged the ports TX, RX in order to, in turn, hold unchanged the data path in the circuit 6; de facto, the reception RX and transmission ports TX of the host 2 and slave devices 3 are not exchangeable: each reception port RX is uniquely destined to receive a data packet D while each transmission port TX is uniquely destined to send a data packet D. Still more particularly, the reception RX and transmission ports TX are configured for enabling only one transmission direction. Alternatively, the physical devices 4 are configured for exchanging the ports RX-TX if the host 2 decides to reverse the communication direction: in such case, the ports of all physical devices 4 are configured for being exchanged in order to define a new direction (circulation) of the data packets D.

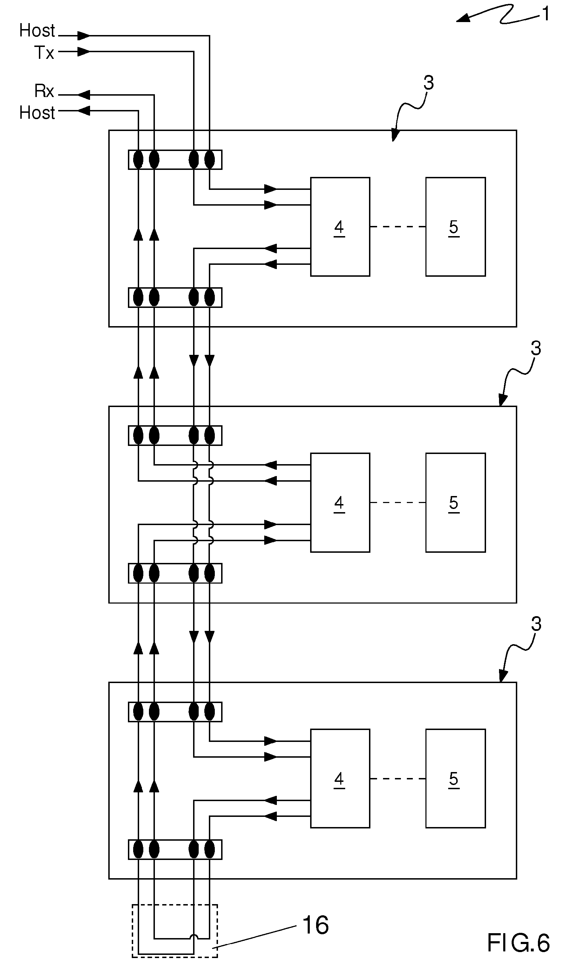

At the physical level, the main transmission and reception lines 7, 8 and interconnection lines 9 of the circuit 6, comprise Ethernet network cables, advantageously cablings or, better, twisted cablings; however, the lines 7, 8 and 9 can comprise at least one selected in the group among the following cables: UTP, FTP, STP, S/STP. Figure 6 shows a preferred configuration regarding the connection of the slave devices 3 and host 2. The cable is represented by a cabling, for example two twisted cablings having an RJ-45 interface, carrying, in a non limiting way, a pair of copper wires: a first pair is configured for carrying the signal TX+/TX- while a second pair is configured for carrying the signal RX+/RX- (they are the signals RX and TX travelling on the cablings). Each slave device 3 has an Ethernet port adapted to receive the cable with the two pairs of copper wires. The first pair is connected to the port RX at the inlet of a slave device 3, particularly the first slave device 3a, while the second pair of wires (RX+/RX-) passes through the first slave device for being connected to the slave device 3 port TX immediately consecutive to the first one. The signal exiting the first slave device 3a passes through the second slave device 3 and arrives to an Ethernet port RX of the slave device immediately consecutive to the second slave device (in the particular case shown in Figure 6, it is represented as the last slave device 3b). The pair of wires exiting the last slave device 3b enter a terminal 16 configured for returning the signal to the host 2. De facto, the terminal 16 resends the connection TX of the last slave device 3b to the port RX of the second slave device 3 which resends then the signal to the host 2. In this type of connection, it is as if the even slave devices (for example the second slave device 3) and odd slave devices are separated (the first and third slave devices and also the first and last slave devices 3a, 3b). The signal exiting the host 2 reaches the physical device 4 only of the odd slave devices: as it is visible the signal TX+/TX- enters the physical device 4 of the first and last slave devices while passes through the second slave device 3. The last slave device 3b returns the signal so that this latter can reach the physical device of even slave devices (in the case illustrated of the second slave device 3): the return signal passes through the first and last slave devices 3a, 3b without this latter passing through the physical device 4 and consequently the integrated device 5. The slave devices are always serially connected, the only difference is that the data packet D reaches the physical devices 4 only of the odd devices while, the return signal reaches the physical device 4 only of the even slave devices. In this way it is possible to arrive at the first slave device 3a with only one Ethernet network cable (a single twisted cabling) without this latter being directly connected also to the last slave device 3b (configuration shown in Figures 1-3). This "going" and "return" type connection is particularly advantageous in case there is a high number of slave devices 3 serially connected to each other; by only one Ethernet network cable connected on one side to the host 2 and on the other side to the slave device 3a of the first network device 1, it is possible to transmit the data packet D to all the slave devices 3: the interconnection mode of the slave devices shown in Figure 6 enables to avoid the connection of the host 2 to the last slave device 3b and the consequent problems associated to the return cable length. Each slave device 3 comprises two Ethernet ports, for example RJ45 connectors, connected to the physical device 4 by a circuit printed on electronic board (Figure 6). The connectors of a slave device are connected to a connector of a further slave device and/or to the connector of the host by Ethernet network cables. An implementation that can be for example used for defining the circuit 6, is, in a non limiting way, a 100Base-TX (fast Ethernet with UTP or STP cablings). The Ethernet network device 1 provides exclusively cable transmissions, in a non limiting way, in a base band; the transmission speeds in such coaxial cables, twisted cablings (shielded or not) and optical fibers are greater than 10 Mbps, preferably are comprised between 100 and 1,000 Mbps.

As hereinbefore described, each TX and RX port of each physical device 4 is destined to only one port RX-TX for defining a unique data transmission path; particularly, each transmission and reception port TR and RX of a slave device 3 is connected, by only one Ethernet cable (for example only one cabling, advantageously a twisted cabling) to only one port RX and TX of a further slave device 3.

As hereinbefore described, the network device 1 comprises a plurality of slave devices 3, each of them comprises only one physical device or PHY-chip 4 which is destined to enable the physical connection with the other devices of the local area network. As it is visible in Figure 1-3, each slave device 3 further comprises at least one integrated device 5, for example a FPGA and/or CPLD type programmable integrated circuit, connected to the respective physical device 4, for example by a MII or RMII interface 18, schematically shown in Figure 1: the integrated device 5 substantially represents "the intelligence" of the slave device 3 capable of reading, withdrawing and modifying the data packet D transmitted on the circuit 6. De facto, the integrated device 5 is configured for reading, withdrawing and simultaneously modifying, particularly writing and/or substituting, the contents of the data packet D itself during the passage of the same, particularly without executing the processing of the read and withdrawn data and therefore without waiting the processing; for example, if there is a processing, this is performed at the end of the frame passage from the integrated device 5 or from a different entity.

The MAC address of the slave device 3 is set in the integrated device 5: in this way the integrated devices 5 having the same MAC address are configured for receiving the same data packet D sendable to the host 2. Particularly, the host 2, by inserting such MAC address in the frame field MD (receiver MAC address field), transmits data to all the slave devices 3 having such MAC address. In a possible configuration of the network device 1, there are a plurality of slave devices 3 having the same MAC address and a predetermined number of slave devices 3 having a different MAC address (the MAC address is different both from the plurality of slave devices and from the host). The integrated device 5 of each slave device 3 is configured for:
- reading the frame field MD (receiver MAC address field),
- reading the frame field MS (source MAC address field),
- checking if it is present inside at least one of the two fields MD and MS its own MAC address.

If the integrated device 5 does not determine the presence of the MAC address neither in the field MD nor inside the field MS, such device 5 retransmits the data packet D to the consecutive slave device 3, according to the packet transmission direction in the circuit 6, without executing any steps of reading the data field (payload) and consequently without modifying the frame. In such a way, the slave devices 3 ensure a fast transmission of the data packet D in the circuit 6 along the transmission direction. Viceversa, in case the integrated device 5 acknowledges its own MAC address inside one of the two fields MD or MS, such device 5 is configured for:
- reading at least part of the contents of the payload (DIF), particularly the data dedicated to it, present in the respective identifying field 10 of the payload DIF,
- withdrawing at least a part of the data of the payload (DIF) containing the information destined to the slave device 3 itself, particularly withdrawing, from said identifying field 10, at least a part of the data,
- simultaneously with the withdrawal of at least a part of the data of the payload (DIF), modifying (there is a kind of substitution) at least a part of the data inside the payload (DIF) itself of the data packet (D) itself, particularly writing and/or substituting, in the identifying field, data (commands and/or information) destined to the host 2 and/or to another slave device 3,
- after a modification of the payload DIF field, recalculating (modifying) the data from the cyclical redundancy control field FCS.

It is observed that, also under the condition wherein there are data (information and/or commands) for the slave device 3, the integrated device 5 is configured for receiving the data packet via the port RX of the physical device and simultaneously transmitting the data packet D, according to the data transmission direction, to the host 2 or the consecutive slave device 3, without processing the read and withdrawn data.

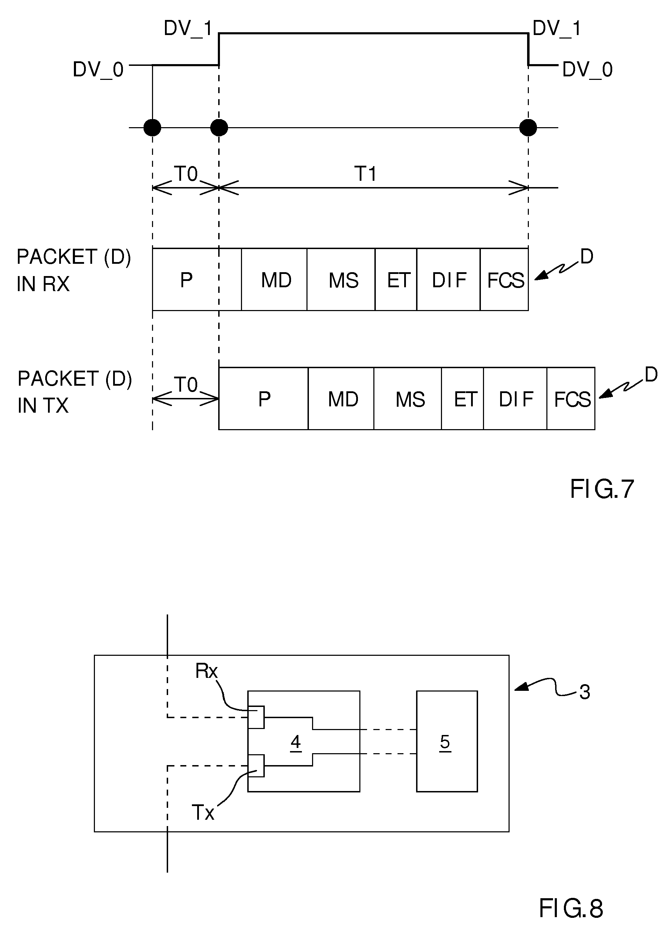

Figures 7 and 8 schematically show the data packet reception and transmission. De facto, the frame D, sent to the host 2, is transmitted to the physical device 4 at the port RX; a predetermined number of bytes, particularly comprised between 1 and 8, is used for activating the physical device 4 and enabling a correct synchronization of the device with the incoming data flow: de facto, the first bytes are exclusively for "activating" the physical device and starting the transmission. In such step, the physical device 4 switches from a deactivation condition (condition DV_0) to a communication active condition (condition DV_1). The time necessary for such switching is defined, for example, as the activation time T0 over the physical device 4 (Figure 7). Under the condition DV_1, the data packet D is transmitted from the physical device 4 to the integrated device 5 which possibly starts reading and/or withdrawing data (possible read and withdrawal of at least part of the data contained in the identifying field 10 dedicated to it). In such switching step, the data are pipelined: the data pass four bits at time (for example with an interface PHY-Mac MII) or two bits at time (with an interface PHY-Mac RMII). The bits (2 or 4) which are not subjected to modifications, are instantaneously retransmitted by passing through the integrated device 5 and then through the physical device port TX; in case of a modification, the bits are substituted with the data to be sent as response to define a "real-time" substitution.

The physical device 4 is configured for activating its own transmission port TX and starting transmitting the data packet D. More specifically, the data packet D is read and withdrawn with an advance before the transmission, equal to the activation time T0 of the physical device: this enables to substantially execute simultaneously the data packet D reception and transmission. Still more particularly, during the data packet reception, there is the in-line passage of the following fields: preamble, receiver MAC, source MAC, ET, payload and field FCS. During the payload passage, the integrated device 5 is configured for reading and withdrawing the data present in the identifying field 10 dedicated to it. With a delay equal to the activation time T0, the preamble, receiver MAC, source MAC, ET, payload fields and the FCS field are transmitted via the transmission port TX of the physical device 4. The integrated device 5, simultaneously with the reading and withdrawal of the data from the payload, possibly writes and/or modifies the data contained in this latter with data for the host 2 or for following slave devices 3 without executing the processing of the read and withdrawn data. Generally, the activation bytes are only contained in the preamble P as schematically shown in Figure 7. The activation time T0 (awakening and synchronization) is therefore equal to the time for reading the preamble bytes and to the "awakening" time of the physical device; the activation time T0, for example, for communicating at 100 Mb/s, is generally less than 1 µs, particularly is comprised between 100 and 960 ns. The step of passing the data packet D between the slave devices 3 is schematically illustrated in Figure 5: each slave device 3 is configured for reading, withdrawing and modifying the identifying field dedicated to it, the field FCS. As it is evident, the steps of processing the information require predetermined times, certainly longer than the sole steps of reading and withdrawing data (it is observed that the sole data reading does not entail delays in the frame propagation between the reception and transmission); the fact of not predicting the processing step, ensures the slave devices 3 a fast data packet D circulation in the circuit 6 along the transmission direction and therefore high transmission speeds. The small delays between reception and transmission are fixed and enable the determinism of the protocol.

The read and withdrawn data are processed independently from the physical device reception/transmission: the data are written/inserted in the payload DIF inside a passing data packet when the processing is completed. De facto, the transmission does not wait the processing of the received data; the processing is done separately from the reception/transmission and the data are written when ready, in a data packet passing from the integrated device 5. Further, the network device 1 can provide a configuration wherein the host 2 does not insert the identifying field 10 of a slave device 3; the integrated device 5 of each slave device 3, under a condition in which its own identifying field 10 is absent, is configured for acting on the payload DIF, for example by modifying the length. Particularly, each integrated device 5 is configured for:
- inserting in the payload DIF of the data packet D a field 10 identifying the slave device 3 itself,
- then, modifying the control field FCS of the data packet D.

Such condition could occur in case the host 2 does not have information or commands destined to a slave device 3 while this latter must send data, for example information regarding the slave device 3 condition, to the host 2; under such condition, the integrated device 5 enables to send information (possibly commands) to the host 2.

In order to readdress the data packet D to the host 2, at least one of the slave devices 3, particularly the integrated device 5, is configured for exchanging the receiver MAC address field MD with the source MAD address field MS of the data packet D transmitted from the host 2 for setting this latter as a receiver. As hereinbefore described, the data packet D can follow only one path and advance along only one transmission direction; for such reason, once the MAD address fields have not been exchanged, the data packet D is constrained to pass through all the serially connected slave devices 3 for arriving to the host 2. In a preferred but non limiting configuration of the invention, the integrated device 5 of the first slave device 3a is configured for exchanging the MAC address field for addressing it again to the host 2: the data packet cannot return directly to the host and must advance along the circuit 6 passing serially through all the consecutive slave devices 3 until it reaches the host 2. Obviously, any other slave device can be responsible of exchanging the MAC address. However, it is preferred that only one slave device 3 is responsible of exchanging the MAC address fields for causing the data packet D to reach the host 2; the data packet D modification is therefore destined to only one integrated device 5 of the network device 1. However, the network device 1 can provide a step of checking the exchange in order to cause the data packet to return to the host 2. For example, it is possible to configure the first slave device 3a for the MAC address fields conversion and the following slave devices 3 for checking the executed conversion. Particularly, the integrated devices 5 of the slave devices 3 following the first can be configured for:
- analyzing the source MAC address field MS for determining if it is coincident with the host 2 MAC address or with the MAC address of the slave devices 3,
- analyzing the receiver MAC address field MD for determining if it is coincident with the host 2 MAC address or with the MAC address of the slave device 3. Under the condition wherein, by mistake, the exchange commanded to the first slave device 3a has not been performed, at least one of the following slave devices 3 is configured for commanding the conversion of the MAC address fields in order to address the data packet to the host 2.

As said, the absence of the data processing by the integrated devices 5 of each slave device 3, enables the same a fast data transmission with a constant delay; de facto, the slave devices 3 are configured for enabling to transmit the data packet D in a time less than 60 µs, particularly in a time comprised between 10 and 50 µsec. The above specified transmission times of the data packet are obtained by summing the following times. The travelling time defined by the time in which a signal passes through a transmissive medium, in other words the Ethernet cable (such time depends on the type of the cable used for defining the circuit 6). The activation (waking up) time T0 of the physical device. The reception time of the data packet is defined by the time between the request of reading the data packet bytes and the moment at which these bytes are sent (the packet exits from the slave device 3). The processing time of each integrated device 5. Obviously, all the times depend on the data packet D size originated by the host (Master). It is observed that the network device 1 is configured for not defining processing times, in other words the latency of a processing module. The reception times, buffer (withdrawal and reading time of the physical device 4) and the reception time defined by each slave device 3 enable to fast send the frame D and therefore a fast data circulation. For example, in a non limiting configuration of the network device 1, this latter enables to send the frame D, in one second, a number of times equal to or greater than 20,000, particularly comprised between 20,000 and 100,000; this to define a transmission frequency equal to or greater than 20 KHz, particularly comprised between 20 and 100 KHz.

As it is visible for example in Figure 3, the network device 1 can advantageously comprise a temporary memory or cache 15 connected to the integrated device 5 or advantageously present inside the integrated device 5, which is configured for temporarily storing the data withdrawn from the data packet D. The use of the temporary memory 15 enables to withdraw the data without the integrated device 5 processing the data withdrawn before sending the frame (the data are processed at the end of the frame passage, after the FCS has checked the correctness): the temporary memory 15 stores a set of data which can then be fast recovered on demand.

### Local area Ethernet network (100)

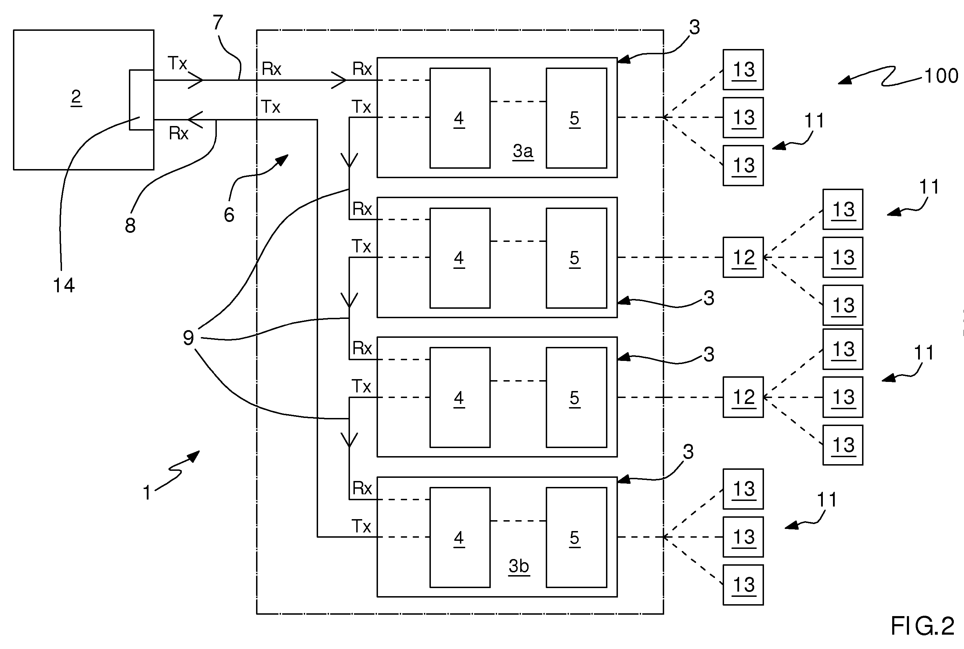

Further, the invention refers to a local area Ethernet network 100 comprising at least one network device 1, as described hereinbefore, connected to one or more users 11; such configuration is for example illustrated in Figures 2 and 3. Particularly, each integrated device 5 is outwardly connected to a respective user 11, for example via communications ports adapted for a short distance fast interconnection, of the SPI type, a parallel bus. Alternatively, the users 11 can be integrated in the devices 5 (this configuration is not shown in the attached figures). The data read out and withdrawn from the integrated device 5 - containing information and/or commands for the users 11 - are sent to these latter: the users 11 are configured for processing the data sent from the slave 3 and translating these latter in commands and/or information. Still more specifically, each integrated device 5, after having withdrawn the information from the respective identifying field 10 (Figure 5), immediately sends such withdrawn data (payload DIF data) to the respective user 11 without processing: in such a way, the information and/or commands sent from the host 2 to the slave devices 3 immediately arrive at the respective users 11. As it is for example visible in Figure 2, the user or peripheral 11 can comprise a control unit 12 directly connected to the respective integrated device 5 and to one or more actuators 13 directly connected to the control unit 12. In such condition, the control unit 12 is interposed between the integrated device 5 and actuators 13: the control unit 12 is configured for processing the data sent from the host 2 and sending a respective command signal to corresponding actuators 13. It is useful to outline that the actuators 13 can be also of the two-way type, in other words they are adapted to receive the command from the host 2 and "actuate" an action towards the outside but can send to the host 2 return information; specifically, the actuators can substantially define sensors configured for reading the outside states (such as for example a temperature) and return them to the integrated device 5, for being sent to the host 2.

In an alternative configuration still shown in Figure 2, the users or peripherals 11 can only comprise one or more actuators 13 directly connected to only one integrated device 5: each actuator 13 is configured for directly receiving the data packet D from the device 5, and reading the information and/or commands contained in it. As illustrated in Figure 3, the temporary memory 15 can be placed on the slave device 3 or directly on the user 11. In the configuration wherein the user or peripheral comprises a control unit 12, it is preferred to place the temporary memory on this latter (a non limiting condition). Viceversa, in case the integrated devices 5 are directly connected to the actuators 13, it is preferred to provide the slave devices 3 with a temporary memory (this also a non limiting condition); in this case it is advantageous to harness the temporary memory 15 present in the integrated device 5, by selecting a component having a sufficient memory capacity.

The users 11 are responsible of the data D processing step which does not impact anyway on the frame transmission (circulation) times. In a preferred but non limiting embodiment of the invention, the actuators 13 comprise a plurality of brushless or stepper motors which are controlled by a pulse-width modulation (PWM) advantageously having an operative frequency less than the network device 1 transmission frequency (for example comprised between 20 and 100 KHz). De facto, the PWMs controlling the actuators have an operative frequency of about 20,000 Hz; the network device 1 is configured therefore for transmitting at least one data packet D PWM every cycle and in such a way to adequately control the actuator 13. The motor control and the current modulation can be directly obtained in the integrated device 5 or possibly in an outside processor 12 (this condition is illustrated in Figure 2). In a configuration, the integrated devices and/or control units 12 are configured for managing digital or analog type signals. Each integrated device 5 can command the outputs and send the inlets state. The inlets can be both digital (ON/OFF states) and analog (reading or setting voltage levels) by ADC or DAC converters.

### Applications

Some possible applications of the above described network device 1 are given in a non limiting way in the following.

Hereinafter it is described, in a non limiting way, a possible and advantageous application of the above described network device 1, which refers to a plant for controlling electric motors for stage floodlights. For example, the system comprises at least one network device 1, as described before, connected to a plurality of motors 3. De facto, the network device 1 is configured for connecting at least one host 2 (one or more control units, more particularly a microprocessor) to a plurality of motors 13 which are placed inside a floodlight.

A first system configuration can comprise a control unit 12 connected, on one side, to an integrated device 5 and, on the other side, to a plurality of motors 13: the control unit 12 is interposed between an integrated device 5 and a plurality of motors 13. The connections are directly made on the printed circuit of the slave device 3 having one connector for two Ethernet cablings RX/TX and connectors for connecting the motor windings.

A second system configuration can provide a plurality of motors connected to an integrated device 5 (the control unit 12 is absent): in both the configurations, the data read out and withdrawn from the integrated device 5 - containing information and/or commands for the floodlights - are sent to these latter: the control unit 12 is configured for processing the data sent from the slave 3 and translate these latter in commands and/or information. Still more particularly, each integrated device 5, after having withdrawn the information from the respective identifying field 10, directly sends the information to the control unit for the processing, or directly processes the withdrawn data: the processed information generate the modulation values PWM for setting the correct current (typically sinusoidal) in the motor phases. As illustrated in Figure 3, the temporary memory 15 can be placed on the slave device 3 or can be placed on the control unit 12. The configuration wherein the plant 100 comprises a control unit 12 preferably places the temporary memory 15 on this latter (non limiting condition). Viceversa, in case wherein the integrated devices 5 are directly connected to the motors 13, it is preferable to provide the slave devices 3 with a temporary memory 15 (this condition is also non limiting), particularly the memory 15 is inside the integrated device 5.

As hereinbefore described, the step of processing the data D is assigned to the control unit 12 and/or is inside the integrated devices 5: such step does not burden in any way the frame transmission (circulation) times. In a preferred but non limiting embodiment of the invention, the motors 13 comprise electric motors controlled by a PWM modulation, having for example an operative frequency less than the transmission frequency of the network device 1. De facto, the PWMs controlling the electric motors 13 have, for example, an operative frequency of about 20,000 Hz. As hereinbefore described, the network device 1, thanks to the absence of the data packet D processing step, enables to send the frame D a number of times greater than 20,000 (particularly comprised between 23,000 and 100,000): the frequency for sending the data packet D of the network device 1 is greater than the operative frequency of PWM, this fact enables the device 1 to transmit at least one data packet D each cycle of the PWM and in such way to adequately control the motors 13 managing the movement and the effects of each floodlight. The data packet D sent from the host 2 to the motors 13 can comprise both command signals regarding the electric motor position and power-on/power-off command signals and about the floodlight operation; in such way, the host 2 can manage the operation of the electric motors of the system and the floodlights operation (mode). Each slave device can receive information from outside sensors and collect data to be send to the host 2: for example, motor temperature, motor current, motor position, limit stop sensors state.

A further application can refer to an interface for distributed inlets/outputs. This application enables to distribute along an Ethernet line, a plurality of slave devices 3 capable of activating a certain number of digital outputs and resending to a Master, for example a host 2, the state of a certain number of digital inlets. The outlets and inlets can also be of an analog type. Each slave device 3 comprises an integrated device formed by a FPGA or CPLD device capable of numbering itself and extracting from the payload information necessary for the activation of the outputs, by substituting it with the state of the inlets to be sent towards the Master.

The same teachings can be also applied in the domotics field. A series of devices controlled by an intelligent unit can collect data as temperatures, current consumptions, open status of doors or windows, wind speed. Further, it is possible to activate relays for actuating rolling shutters, sunshades, lights, hydraulic gardening systems, alarm sirens. The network device 1 speed enables to highly efficiently monitor the state of several accessories. Further, the transmission rapidity enables a fast control of several accessories distributed across the local network. Further, the network device speed makes possible to transport audios and videos: the deterministic protocol enables to use simplified audio/video compression algorithms because they don't require the pitch variation (audio sampling frequency), which is required wherein it is not possible to predict the communication latency. Therefore it is possible to integrate in the domotics system also house phones or video house phones.

### ADVANTAGES OF THE INVENTION

The network device 1, object of the present invention, enables to obtain important advantages. First of all, it is useful to note that the Ethernet device 1 has a particularly simple and economical structure. Moreover, the particularly structure of the device 1 makes it extremely reliable and efficient. Specifically, the particular series connection of the slave devices 3 and the configuration of each integrated device 5 ensure a fast data transmission/circulation by preventing collisions between packets and consequently transmission errors or variable and unpredictable latencies: for these reasons it is possible to have at disposal a real-time deterministic protocol. Generally, the network device 1 enables to implement economical LANs which are extremely fast in terms of data transmission and particularly adapted inside integrated (embedded) systems wherein it is not possible to form the whole electronic circuit on only one board: the fast interconnection between the boards and the implementable synchronization enable to distribute the logics across plural boards by minimizing the number of wirings and components. The type of connection implemented is adequate to a deterministic real-time protocol. This characteristic is particularly advantageous in all the local area networks connecting peripherals which must be perfectly synchronized with each other. The absence of processing steps in the data packet transmission circuit 6 enables to make extremely fast the data circulation and also easily monitorable. More particularly, it is useful to specify that the only non determinable times in the computer networks regard the processing latencies or communication errors for example due to the collisions: these prevent to determine the data circulation time and therefore the peripherals control. For this reason, the switches are not adapted to synchronize the peripherals most of all under a condition wherein there is a high number of peripherals and a high number of transmission packets in the circuit 6. By eliminating the processing step in the transmission circuit, it is possible to calculate or at least measure and hold constant the data transmission times. Knowing the transmission times enables the network device 1 to efficiently control the synchronization of the several peripherals.

## Claims

1. Ethernet network device (1) comprising:
- at least one host (2) having at least one transmission port (TX) and at least one reception port (RX),
- a plurality of slave devices (3) comprising at least one first and one last slave devices (3a, 3b), each slave device (3) having:
• a physical device or PHY-chip (4), particularly only one physical device or PHY-chip (4), having at least one respective reception port (RX) and at least one respective transmission port (TX);
• at least one integrated device (5), particularly of the programmable type, connected to the physical device (4), optionally by at least one MII or RMII converter;
- at least one circuit (6) on which the host (2) and slave devices (3) are active, said circuit (6) having at least one main data sending line (7) directly connected, on one side, to the host (2) transmission port (TX) and, on the other side, directly connected to the first slave device (3a) reception port (RX), said circuit (6) further having one main data receiving line (8) directly connected, on one side, to the host (2) reception port (RX) and, on the other side, connected to the transmission port (TX) of the last slave device (3b), said circuit (6) further having at least one interconnection line (9) connected, on one side, to the transmission port (TX) of one slave device (3), and on the other side, directly connected to the reception port (RX) of one slave device (3) consecutive according to a data transmission direction to define a series connection between the slave devices (3), **characterized in that** the slave devices (3) have a same MAC address which is set in each integrated device (5), so that the integrated device (5) of each of said slave device (3) is configured for receiving a data packet (D) having said MAC address, each integrated device (5) being configured for:
- receiving at least one data packet (D) according to an Ethernet protocol, said data packet (D) being of the type comprising at least one preamble (P), at least one receiver MAC address (MD), at least one source MAC address (MS), a field identifying the used protocol type (FT), at least one payload field (DIF), one cyclical redundancy control field (FCS),
- reading at least part of the contents of the payload (DIF),
- withdrawing at least a part of the payload (DIF) data containing the information destined to the slave device (3) itself,
- modifying at least part of the data contained in the payload (DIF) and/or data from the cyclical redundancy control field (FCS),
- simultaneously with the withdrawal of at least a part of the payload (DIF) data, modifying at least a part of the data inside the payload itself (DIF) of the data packet (D) itself.

2. Device according to the preceding claim, wherein each integrated device (5) is configured for withdrawing at least a part of the payload (DIF) data and simultaneously modifying, particularly writing and/or substituting, data inside the data packet (D) itself according to the data direction transmission without executing the processing of the read and/or withdrawn data.

3. Device according to anyone of the preceding claims, wherein the physical device (4) of each of said slave devices (3) is configured for receiving at the inlet the data packet (D) from the preamble (P) and activating the transmission via the reception port (RX) only after the passage of a predetermined number of bytes of the data packet (D) and therefore after a prefixed activation time (TO), said physical device (4) is configured for activating the transmission port (TX) simultaneously or immediately after the activation of the reception port (RX) of the same physical device (4),
and wherein the integrated device (5) is configured for:
- receiving at the inlet, via the reception port (RX) of the physical device (4), the data packet (D),
- transmitting at the output, via the transmission port (TX), of the same physical device (4) the data packet (D) itself substantially with a transmission delay equal to the activation time (T0).

4. Network device according to the preceding claim, wherein the integrated device (5) is configured for reading and/or withdrawing at least part of the data contained in the data packet (D) during the step of receiving the same, the integrated device (5) is configured for modifying, particularly writing and/or substituting, at least part of the data contained in the data packet (D) itself during the step of transmitting the same.

5. Device according to claim 3 or 4, wherein the physical device (4) of each of said slave devices (3) is configured for receiving at the inlet the data packet (D) from the preamble (P) and activating the transmission, via the reception port (RX), only after the passage of a prefixed number of bytes of the preamble (P), particularly after the passage of a number of bytes comprised between 1 and 8.

6. Device according to anyone of claims from 3 to 5, wherein the physical device (4) is configured for determining a delay between the data packet (D) reception via the reception port (RX) and the transmission of the same via the transmission port (TX), substantially equal to the prefixed activation time (T0).

7. Device according to anyone of the preceding claims, wherein at least one of the slave devices (3) is configured for exchanging the receiver MAC address field (MD) with the source MAC address field (MS) of the data packet (D) transmitted from the host (2) for setting this latter as a receiver, enabling the host (2) to receive the data packet (D) modified by the slave devices (3).

8. Device according to anyone of the preceding claims, wherein the host (2) reception port (RX) is directly connected to only one transmission port (TX) of a single slave device (3), particularly the host (2) reception port (RX) is directly connected to the transmission port (TX) of a slave device (3) distinct from the first slave (3a), optionally is directly connected to the transmission port (TX) of the last slave device (3b), and wherein the host (2) transmission port (TX) is directly connected to only one reception port (RX) of only one slave device (3), particularly the host (2) transmission port (TX) is directly connected to the reception port (RX) of the first slave (3a).

9. Device according to anyone of the preceding claims, wherein each slave device (3) comprises only one physical device (4), each physical device (4) of each slave device (3) comprises only one transmission port (TX) and only one reception port (RX).

10. Device according to anyone of the preceding claims, wherein the reception (RX) and transmission ports (TX) of the host (2) and slave devices (3) are not switchable, during the transmission, each reception port (RX) is uniquely destined to receive a data packet (D) while each transmission port (TX) is uniquely destined to send a data packet (D), the reception (RX) and transmission ports (TX) of the data packet (D) are configured for enabling only one transmission direction.

11. Device according to anyone of the preceding claims, wherein the host (2) is configured for defining, inside the data packet (D) payload (DIF), a plurality of identifying fields (10) each of them is destined to only one specific slave device (3), the host (2) is configured for communicating with each of the slave devices (3) by inserting in the respective identifying field (10) data identifying the specific slave device (3) and real data of information and/or commands for the specific slave device (3),
the integrated device (5) of each slave device (3) is configured for:
- reading at least the identifying field (10) dedicated to it,
- withdrawing, from said identifying field (10), at least a part of the data,
- modifying, particularly writing and/or modifying, inside said identifying field (10), at least a further part of data destined to the host (2), and/or to a further slave device (3),
- recalculating, after the modification of the identifying field (10), the control field (FCS).

12. Local area Ethernet network (100) comprising:
- at least one network device (1) according to anyone of the preceding claims,
- at least one user (11) connected to the network device (1),
the integrated device (5) of each slave device (3) is configured for:
- withdrawing the data dedicated to it and sending them to the host (2) by the data packet (D) payload (DIF),
- forwarding the same data packet (D) to a consecutive slave device (3) and/or host (2) without executing the processing of the read and withdrawn data,
- after having forwarded the data packet (D), sending the data, in a processed form or in an unprocessed form, to one or more users.

## Patentansprüche

1. Ethernet Netzwerkgerät (1) umfassend:
- mindestens einen Host (2), der mindestens einen Übertragungsanschluss (TX) und mindestens einen Empfangsanschluss (RX) aufweist,
- eine Vielzahl von Slave-Geräten (3), umfassend mindestens ein erstes und ein letztes Slave-Gerät (3a, 3b), wobei jedes Slave-Gerät (3) aufweist:
• ein physisches Gerät oder einen PHY-Chip (4), insbesondere nur ein physisches Gerät oder einen PHY-Chip (4), das/der mindestens einen jeweiligen Empfangsanschluss (RX) und mindestens einen jeweiligen Übertragungsanschluss (TX) aufweist;
• mindestens ein integriertes Gerät (5), insbesondere programmierbaren Typs, verbunden mit dem physischen Gerät (4), wahlweise durch mindestens einen MII oder RMII Wandler;
- mindestens einen Schaltkreis (6), auf den der Host (2) und die Slave-Geräte (3) wirken, wobei der Schaltkreis (6) mindestens eine Hauptdatensendeleitung (7) aufweist, die auf einer Seite direkt mit dem Übertragungsanschluss (TX) des Hosts (2) verbunden ist und auf der anderen Seite direkt mit dem Empfangsanschluss (RX) des ersten Slave-Geräts (3a) verbunden ist, wobei der Schaltkreis (6) weiter eine Hauptdatenempfangsleitung (8) aufweist, die auf der einen Seite direkt mit dem Empfangsanschluss (RX) des Hosts (2) verbunden ist und auf der anderen Seite direkt mit dem Übertragungsanschluss (TX) des letzten Slave-Geräts (3b) verbunden ist, wobei der Schaltkreis (6) weiter mindestens eine Kopplungsleitung (9) aufweist, die auf der einen Seite mit dem Übertragungsanschluss (TX) eines Slave-Geräts (3) verbunden ist und auf der anderen Seite direkt mit dem Empfangsanschluss (RX) eines Slave-Geräts (3) verbunden ist, aufeinanderfolgend gemäß einer Datenübertragungsrichtung, um eine Reihenverbindung zwischen den Slave-Geräten (3) zu definieren, **dadurch gekennzeichnet, dass** die Slave-Geräte (3) dieselbe MAC-Adresse aufweisen, die in jedem integrierten Gerät (5) eingestellt ist, sodass das integrierte Gerät (5) jedes der Slave-Geräte (3) konfiguriert ist, ein Datenpaket (D) zu empfangen, das die MAC-Adresse aufweist, wobei jedes integrierte Gerät (5) konfiguriert ist, zum:
- Empfangen mindestens eines Datenpakets (D) gemäß einem Ethernet Protokoll, wobei das Datenpaket (D) des Typs ist, umfassend mindestens eine Präambel (P), mindestens eine Empfänger-MAC-Adresse (MD), mindestens eine Quell-MAC-Adresse (MS), ein Feld, das den verwendeten Protokolltyp (FT) identifiziert, mindestens ein Nutzlastfeld (DIF), ein CRC-Feld (FCS),
- Lesen mindestens eines Teils des Inhalts der Nutzlast (DIF),
- Entnehmen mindestens einen Teils der Nutzlastdaten (DIF), der die Information enthält, die für das Slave-Gerät (3) selbst bestimmt ist,
- Modifizieren mindestens eines Teils der Daten, die in der Nutzlast (DIF) enthalten sind und/oder Daten des CRC-Feldes (FCS),
- gleichzeitig mit dem Entnehmen mindestens einen Teils der Nutzlastdaten (DIF), Modifizieren mindestens einen Teils der Daten in der Nutzlast selbst (DIF) des Datenpakets (D) selbst.

2. Gerät gemäß dem vorhergehenden Anspruch, wobei jedes integrierte Gerät (5) konfiguriert ist zum Entnehmen mindestens einen Teils der Nutzlastdaten (DIF) und gleichzeitiges Modifizieren, insbesondere Schreiben und/oder Ersetzen, von Daten in dem Datenpaket (D) selbst, gemäß der Datenübertragungsrichtung, ohne Durchführung des Verarbeitens der gelesenen und/oder entnommenen Daten.

3. Gerät gemäß einem der vorhergehenden Ansprüche, wobei das physische Gerät (4) jedes der Slave-Geräte (3) konfiguriert ist zum Empfangen, am Eingang, des Datenpakets (D) ab der Präambel (P) und Aktivieren der Übertragung über den Empfangsanschluss (RX) nur nach dem Durchgang einer vorbestimmten Anzahl an Bytes des Datenpakets (D) und daher nach einer vorgegebenen Aktivierungszeit (T0), wobei das physische Gerät (4) konfiguriert ist zum Aktivieren des Übertragungsanschlusses (TX) gleichzeitig oder sofort nach der Aktivierung des Empfangsanschlusses (RX) desselben physischen Geräts (4),
und wobei das integrierte Gerät (5) konfiguriert ist zum:
- Empfangen, am Eingang, des Datenpakets (D) über den Empfangsanschluss (RX) des physischen Geräts (4),
- Übertragen, am Ausgang, des Datenpakets (D) selbst über den Übertragungsanschluss (TX) desselben physischen Geräts, im Wesentlichen mit einer Übertragungsverzögerung, die gleich der Aktivierungszeit (T0) ist.

4. Netzwerkgerät gemäß dem vorhergehenden Anspruch, wobei das integrierte Gerät (5) konfiguriert ist zum Lesen und/oder entnehmen mindestens eines Teils der Daten, die im Datenpaket (D) enthalten sind, während des Schritts des Empfangens derselben, wobei das integrierte Gerät (5) konfiguriert ist zum Modifizieren, insbesondere Schreiben und/oder Ersetzen, mindestens eines Teils der Daten, die im Datenpaket (D) selbst enthalten sind, während des Schritts des Übertragens derselben.

5. Gerät gemäß Anspruch 3 oder 4, wobei das physische Gerät (4) jedes der Slave-Geräte (3) konfiguriert ist zum Empfangen, am Eingang, des Datenpakets (D) ab der Präambel (P) und Aktivieren der Übertragung, über den Empfangsanschluss (RX), nur nach dem Durchgang einer vorgegebenen Anzahl von Bytes der Präambel (P), insbesondere nach dem Durchgang einer Anzahl von Bytes umfasst zwischen 1 und 8.

6. Gerät gemäß einem der Ansprüche von 3 bis 5, wobei das physische Gerät (4) konfiguriert ist zum Bestimmen einer Verzögerung zwischen dem Empfang des Datenpakets (D) über den Empfangsanschluss (RX) und der Übertragung desselben über den Übertragungsanschluss (TX), im Wesentlichen gleich zur vorgegebenen Aktivierungszeit (T0).

7. Gerät gemäß einem der vorhergehenden Ansprüche, wobei mindestens eines der Slave-Geräte (3) konfiguriert ist zum Austauschen des Empfänger-MAC-Adressfelds (MD) mit dem Quell-MAC-Adressfeld (MS) des Datenpakets (D), das vom Host (2) übertragen wird, zum Einstellen des letzteren als einen Empfänger, wodurch dem Host (2) ermöglicht wird, das Datenpaket (D) modifiziert durch die Slave-Geräte (3) zu empfangen.

8. Gerät nach einem der vorhergehenden Ansprüche, wobei der Empfangsanschluss (RX) des Hosts (2) direkt mit nur einem Übertragungsanschluss (TX) eines einzelnen Slave-Geräts (3) verbunden ist, insbesondere wobei der Empfangsanschluss (RX) des Hosts (2) direkt mit dem Übertragungsanschluss (TX) eines Slave-Geräts (3) verbunden ist, das vom ersten Slave-Gerät (3a) verschieden ist, wahlweise direkt mit dem Übertragungsanschluss (TX) des letzten Slave-Geräts (3b),
und wobei der Übertragungsanschluss (TX) des Hosts (2) direkt mit nur einem Empfangsanschluss (RX) nur eines einzelnen Slave-Geräts (3) verbunden ist, insbesondere wobei der Übertragungsanschluss (TX) des Hosts (2) direkt mit dem Empfangsanschluss (RX) des ersten Slave-Geräts (3a) verbunden ist.

9. Gerät gemäß einem der vorhergehenden Ansprüche, wobei jedes Slave-Gerät (3) nur ein physisches Gerät (4) umfasst, wobei jedes physische Gerät (4) jedes Slave-Geräts (3) nur einen Übertragungsanschluss (TX) und nur einen Empfangsanschluss (RX) umfasst.

10. Gerät gemäß einem der vorhergehenden Ansprüche, wobei die Empfangs- (RX) und Übertragungsanschlüsse (TX) des Hosts (2) und der Slave-Geräte (3) nicht schaltbar sind, während der Übertragung, jeder Empfangsanschluss (RX) ist einzig dazu bestimmt, ein Datenpaket (D) zu empfangen, während jeder Übertragungsanschluss (TX) einzig dazu bestimmt ist, ein Datenpaket (D) zu senden, wobei die Empfangs- (RX) und Übertragungsanschlüsse (TX) des Datenpakets (D) konfiguriert sind, nur eine Übertragungsrichtung zu ermöglichen.

11. Gerät gemäß einem der vorhergehenden Ansprüche, wobei der Host (2) konfiguriert ist zum Definieren, innerhalb der Nutzlast (DIF) des Datenpakets (D), einer Vielzahl von identifizierenden Feldern (10), jedes von ihnen ist nur für ein spezifisches Slave-Gerät (3) bestimmt, der Host (2) ist konfiguriert zum Kommunizieren mit jedem der Slave-Geräte (3) durch Einfügen von Daten in das jeweilige identifizierende Feld (10), die das spezifische Slave-Gerät (2) identifizieren, und von Realdaten von Informationen und/oder Befehlen für das spezifische Slave-Gerät (3),
das integrierte Gerät (5) jedes Slave-Geräts (3) ist konfiguriert zum:
- Lesen mindestens des identifizierenden Feldes (10), das ihm zugeordnet ist,
- Entnehmen, aus dem identifizierenden Feld (10), mindestens einen Teils der Daten,
- Modifizieren, insbesondere Schreiben und/oder Modifizieren, innerhalb des identifizierenden Feldes (10), mindestens eines weiteren Teils der Daten, die für den Host (2) bestimmt sind, und/oder für ein weiteres Slave-Gerät (3),
- Neuberechnen, nach der Modifikation des identifizierenden Feldes (10), des Kontrollfeldes (FCS).

12. Lokales Ethernet Netzwerk (100), umfassend:
- mindestens ein Netzwerkgerät (1) gemäß einem der vorhergehenden Ansprüche,
- mindestens ein Nutzer (11), der mit dem Netzwerkgerät (1) verbunden ist, das integrierte Gerät (5) jedes Slave-Geräts (3) ist konfiguriert zum:
- Entnehmen der Daten, die ihm zugeordnet sind, und Senden derer zum Host (2) durch die Nutzlast (DIF) des Datenpakets (D),
- Weiterleiten desselben Datenpakets (D) an ein nachfolgendes Slave-Gerät (3) und/oder den Host (2) ohne Ausführen der Verarbeitung der gelesenen und entnommenen Daten,
- nach dem Weiterleiten des Datenpakets (D), Senden der Daten in einer verarbeiteten Form oder in einer unverarbeiteten Form an einen oder mehrere Nutzer.

## Revendications

1. Dispositif de réseau Ethernet (1), comprenant :
- au moins un hôte (2) ayant au moins un port de transmission (TX) et au moins un port de réception (RX),
- une pluralité de dispositifs esclaves (3) comprenant au moins un premier et un dernier dispositif esclave (3a, 3b), chaque dispositif esclave (3) comprenant :
• un dispositif physique ou puce PHY (4), notamment un seul dispositif physique ou puce PHY (4) possédant au moins un port de réception respectif (RX) et au moins un port de transmission respectif (TX) ;
• au moins un dispositif intégré (5), notamment de type programmable, connecté au dispositif physique (4), facultativement par au moins un convertisseur MII ou RMII ;
- au moins un circuit (6) sur lequel l'hôte (2) et les dispositifs esclaves (3) sont actifs, ledit circuit (6) ayant au moins une ligne principale d'émission de données (7) directement connectée, sur un côté, au port de transmission (TX) de l'hôte (2) et, directement connectée, sur l'autre côté, au port de réception (RX) du premier dispositif esclave (3a), ledit circuit (6) ayant, en outre, une ligne principale de réception de données (8) directement connectée, sur un côté, au port de réception (RX) de l'hôte (2) et directement connectée, sur l'autre côté, au port de transmission (TX) du dernier dispositif esclave (3b), ledit circuit (6) ayant, en outre, au moins une ligne d'interconnexion (9) connectée, sur un côté, au port de transmission (TX) d'un dispositif esclave (3) et directement connectée, sur l'autre côté, au port de réception (RX) d'un dispositif esclave (3) suivant selon un sens de transmission des données pour définir une connexion en série entre les dispositifs esclaves (3), **caractérisé en ce que**
les dispositifs esclaves (3) ont une même adresse MAC qui est placée dans chaque dispositif intégré (5), de sorte que le dispositif intégré (5) de chacun desdits dispositifs esclaves (3) est configuré pour recevoir un paquet de données (D) ayant ladite adresse MAC,
chaque dispositif intégré (5) étant configuré pour :
- recevoir au moins un paquet de données (D) selon un protocole Ethernet, ledit paquet de données (D) étant du type comprenant au moins un préambule (P), au moins une adresse MAC de récepteur (MD), au moins une adresse MAC de source (MS), un champ identifiant le type de protocole utilisé (FT), au moins un champ de charge utile (DIF), un champ de contrôle de redondance cyclique (FCS),
- lire au moins une partie du contenu de la charge utile (DIF),
- retirer au moins une partie des données de la charge utile (DIF) contenant les informations destinées au dispositif esclave (3) lui-même,
- modifier au moins une partie des données contenues dans la charge utile (DIF) et/ou des données du champ de contrôle de redondance cyclique (FCS),
- simultanément au retrait d'au moins une partie des données de la charge utile (DIF), modifier au moins une partie des données à l'intérieur de la charge utile (DIF) elle-même du paquet de données (D) lui-même.

2. Dispositif selon la revendication précédente, chaque dispositif intégré (5) étant configuré pour retirer au moins une partie des données de la charge utile (DIF) et simultanément modifier, notamment lire et/ou remplacer, des données à l'intérieur du paquet de données (D) lui-même, selon le sens de transmission des données, sans procéder au traitement des données lues et/ou retirées.

3. Dispositif selon l'une quelconque des revendications précédentes, le dispositif physique (4) de chacun desdits dispositifs esclaves (3) étant configuré pour recevoir, en entrée, le paquet de données (D) du préambule (P) et activer la transmission par l'intermédiaire du port de réception (RX) uniquement après le passage d'un nombre prédéterminé d'octets du paquet de données (D) et, donc, après un temps d'activation (T0) préalablement fixé, ledit dispositif physique (4) étant configuré pour activer le port de transmission (TX) simultanément ou immédiatement après l'activation du port de réception (RX) du même dispositif physique (4),
et le dispositif intégré (5) étant configuré pour :
- recevoir en entrée, par l'intermédiaire du port de réception (RX) du dispositif physique (4), le paquet de données (D),
- transmettre en sortie, par l'intermédiaire du port de transmission (TX) du même dispositif physique (4), le paquet de données (D) lui-même avec un délai de transmission sensiblement égal au temps d'activation (T0).

4. Dispositif de réseau selon la revendication précédente, le dispositif intégré (5) étant configuré pour lire et/ou retirer au moins une partie des données contenues dans le paquet de données (D) pendant l'étape de réception de ce dernier, le dispositif intégré (5) étant configuré pour modifier, notamment lire et/ou remplacer, au moins une partie des données contenues dans le paquet de données (D) lui-même pendant l'étape de transmission de ce dernier.

5. Dispositif selon la revendication 3 ou 4, le dispositif physique (4) de chacun desdits dispositifs esclaves (3) étant configuré pour recevoir, en entrée, le paquet de données (D) du préambule (P) et activer la transmission, par l'intermédiaire du port de réception (RX), uniquement après le passage d'un nombre préalablement fixé d'octets du préambule (P), notamment après le passage d'un nombre d'octets compris entre 1 et 8.

6. Dispositif selon l'une quelconque des revendications 3 à 5, le dispositif physique (4) étant configuré pour déterminer un délai entre la réception du paquet de données (D) par l'intermédiaire du port de réception (RX) et sa transmission par l'intermédiaire du port de transmission (TX) sensiblement égal au temps d'activation (T0) préalablement fixé.

7. Dispositif selon l'une quelconque des revendications précédentes, au moins un des dispositifs esclaves (3) étant configuré pour échanger le champ d'adresse MAC de récepteur (MD) avec le champ d'adresse MAC de source (MS) du paquet de données (D) transmis depuis l'hôte (2) pour faire de ce dernier un récepteur, permettant à l'hôte (2) de recevoir le paquet de données (D) modifié par les dispositifs esclaves (3).

8. Dispositif selon l'une quelconque des revendications précédentes, le port de réception (RX) de l'hôte (2) étant directement connecté à un seul port de transmission (TX) d'un seul dispositif esclave (3), notamment le port de réception (RX) de l'hôte (2) étant directement connecté au port de transmission (TX) d'un dispositif esclave (3) distinct du premier esclave (3a), facultativement étant directement connecté au port de transmission (TX) du dernier dispositif esclave (3b),
et le port de transmission (TX) de l'hôte (2) étant directement connecté à un seul port de réception (RX) d'un seul dispositif esclave (3), notamment le port de transmission (TX) de l'hôte (2) étant directement connecté au port de réception (RX) du premier esclave (3a).

9. Dispositif selon l'une quelconque des revendications précédentes, chaque dispositif esclave (3) comprenant un seul dispositif physique (4), chaque dispositif physique (4) de chaque dispositif esclave (3) comprenant un seul port de transmission (TX) et un seul port de réception (RX).

10. Dispositif selon l'une quelconque des revendications précédentes, les ports de réception (RX) et de transmission (TX) de l'hôte (2) et des dispositifs esclaves (3) ne pouvant pas être commutés pendant la transmission, chaque port de réception (RX) servant uniquement à recevoir un paquet de données (D) tandis que chaque port de transmission (TX) sert uniquement à envoyer un paquet de données (D), les ports de réception (RX) et de transmission (TX) du paquet de données (D) étant configurés pour ne permettre qu'un seul sens de transmission.

11. Dispositif selon l'une quelconque des revendications précédentes, l'hôte (2) étant configuré pour définir, à l'intérieur de la charge utile (DIF) du paquet de données (D), une pluralité de champs d'identification (10) dont chacun est destiné à un seul dispositif esclave spécifique (3), l'hôte (2) étant configuré pour communiquer avec chacun des dispositifs esclaves (3) en insérant dans les champs d'identification (10) respectifs des données identifiant le dispositif esclave spécifique (3) et des données réelles d'information et/ou des commandes pour le dispositif esclave spécifique (3),
le dispositif intégré (5) de chaque dispositif esclave (3) étant configuré pour :
- lire au moins le champ d'identification (10) qui lui est dédié,
- retirer au moins une partie des données dudit champ d'identification (10),
- modifier, notamment lire et/ou modifier, à l'intérieur dudit champ d'identification (10) au moins une autre partie des données destinées à l'hôte (2) et/ou à un autre dispositif esclave (3),
- recalculer, après la modification du champ d'identification (10), le champ de contrôle (FCS).

12. Réseau local Ethernet (100) comprenant :
- au moins un dispositif de réseau (1) selon l'une quelconque des revendications précédentes,
- au moins un utilisateur (11) connecté au dispositif de réseau (1),
le dispositif intégré (5) de chaque dispositif esclave (3) étant configuré pour :
- retirer les données qui lui sont dédiées et les envoyer à l'hôte (2) par le biais de la charge utile (DIF) du paquet de données (D),
- envoyer le même paquet de données (D) à un dispositif esclave (3) suivant et/ou à l'hôte (2) sans procéder au traitement des données lues et retirées,
- après avoir envoyé le paquet de données (D), envoyer les données à un ou plusieurs utilisateurs sous une forme traitée ou sous une forme non traitée.
